# EUROPEAN PATENT APPLICATION

(11) **EP 2 770 227 A2**
(43) Date of publication of application: **27.08.2014**
(21) Application number: 14156177.9
(22) Date of filing: 21.02.2014
(51) Int. Cl.: F16F 9/46

(54) **Damping force control valve and shock absorber**

(30) Priority: 22.02.2013 JP 2013033324
(71) Applicant: Yamaha Motor Hydraulic System Kabushiki Kaisha, Shuchi-gun, Shizuoka 437-0223 (JP)
(72) Inventor: ITO, Keisuke, Shuchi-gun, Shizuoka 437-0223 (JP)
(74) Representative: Stöckeler, Ferdinand

(57) **Abstract**

A damping force control valve (10) is provided that achieves, with a small and simple structure, excellent comfort in riding with ensuring of excellent running performance even in a case where current feeding is disabled. A damping force control valve (10) includes: a valve body (20) supported so as to be movable in a first direction or a second direction that is opposite to the first direction; a solenoid (23,25) configured to apply a force traveling toward the first direction to the valve body (20); a biasing element (34, 35, 36) configured to apply a force traveling toward the second direction to the valve body (20); a first working fluid chamber (30) in which part of the valve body (20) is positioned; a working fluid passage (31) that is communicable with the first working fluid chamber (30) via a first port (30a) or a second port (30b); and the first port (30a) and the second port (30b) for communicating the first working fluid chamber (30) with the working fluid passage (31). The damping force control valve (10) is brought into a first state, a second state, or a third state as a result of a change in the position of the valve body (20) caused by power supplied to the solenoid (23, 25). The first state is a state where power is supplied to the solenoid (23, 25) so that the first port (30a) is opened and the second port (30b) is closed. The second state is a state where power supplied to the solenoid (23, 25) is lower than the power supplied to the solenoid (23, 25) in the first state so that the first port (30a) and the second port (30b) are closed. The third state is a state where power supplied to the solenoid (23, 25) is lower than the power supplied to the solenoid (23, 25) in the second state so that the first port (23, 25) is closed and the second port (23, 25) is opened.

## Description

### [TECHNICAL FIELD]

The present invention relates to a damping force control valve and a shock absorber.

### [BACKGROUND ART

In an automobile, a motorcycle, or the like, a shock absorber (buffer) is generally provided for damping vibrations caused in a vehicle. The shock absorber normally includes a cylinder. A piston and a support shaft that supports the piston are arranged in the cylinder. The interior of the cylinder is divided into two oil chambers by the piston. The piston moves in association with expansion or contraction of the shock absorber, and thereby oil moves between the two oil chambers. An orifice, a valve, or the like, that defines a fluid passage with a relatively narrow passage area, is arranged in a path of movement of the oil. The orifice, the valve, or the like, serves as a damping force generation part. A flow resistance occurring when the oil passes through the fluid passage having such a small area is used to generate a damping force, for damping vibrations caused in the vehicle.

Among conventional shock absorbers, there is a shock absorber including a damping force control valve (variable orifice) whose aperture is adjustable under an electronic control. Types of this shock absorber include a shock absorber in which the valve is placed inside a cylinder and a shock absorber in which the valve is placed outside a cylinder. In either of them, the damping force control valve is provided in parallel with a damping force generation part serving as a main part. Adjusting the aperture of the damping force control valve in accordance with running conditions enables a control of the damping force.

Conventional damping force control valves include a flow control valve using a solenoid. The flow control valve is configured such that, in a case where current feeding is disabled because of disconnection or the like, the valve is closed so that maximum damping force characteristics are exerted, to thereby ensure excellent running performance (for example, see Patent Document 1).

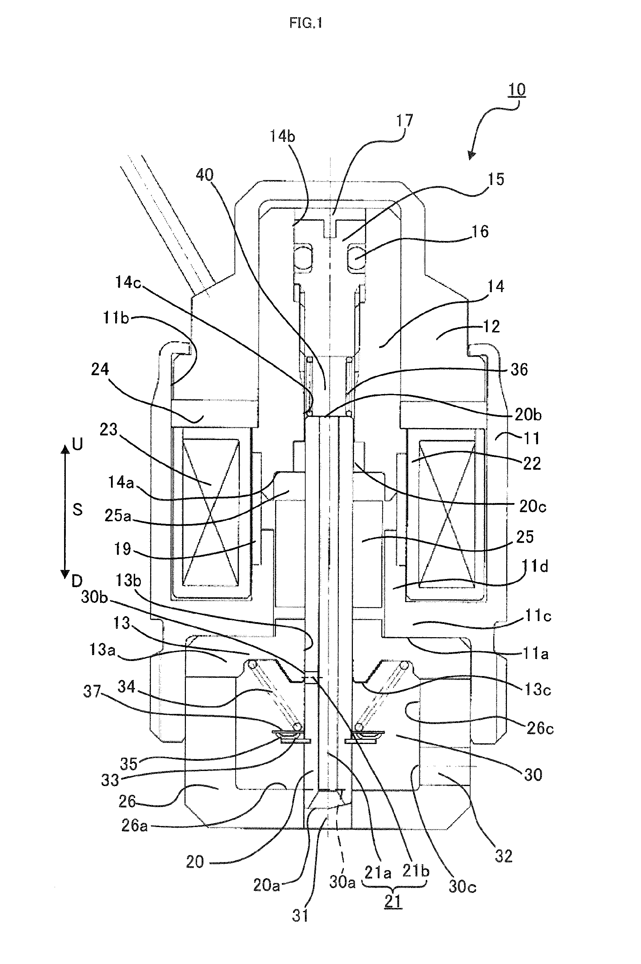

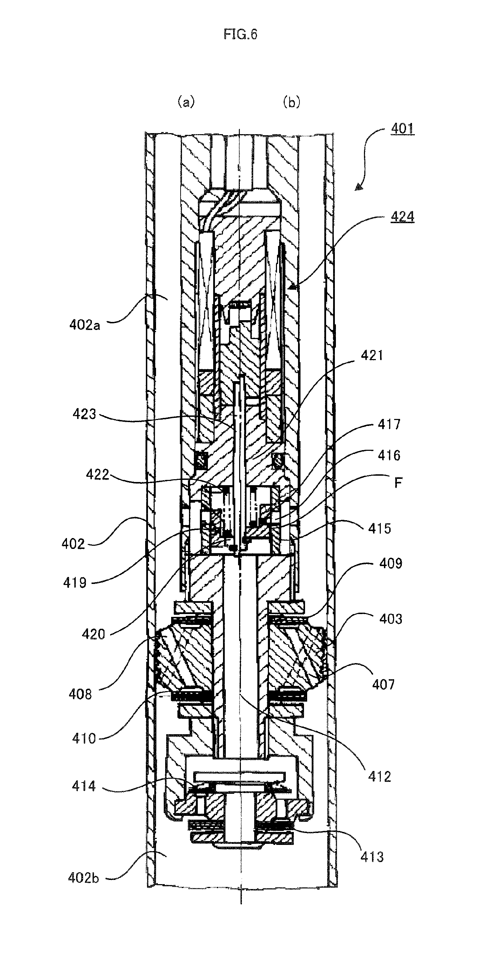

FIG. 6 is a diagram schematically showing a vertical cross-section of a shock absorber 401 disclosed in the Patent Document 1. FIG. 6(a) shows a state of the shock absorber 401 when the maximum damping force characteristics are exerted (when the valve is fully closed). FIG. 6(b) shows a state of the shock absorber 401 when minimum damping force characteristics are exerted (see FIG. 1 of the Patent Document 1).

The shock absorber 401 includes a cylinder 402 having a piston 403. A space inside the cylinder 402 is divided into a cylinder upper chamber 402a and a cylinder lower chamber 402b by the piston 403. The piston 403 has main hydraulic fluid passages 407 and 408. Damping force generation parts 409 and 410 are provided in the main hydraulic fluid passages 407 and 408. A damping force generation part 413 and a check valve 414 are provided in a bypass 412. The passage resistance of the damping force generation part 413 is lower than the passage resistances of the damping force generation parts 409 and 410 of the main hydraulic fluid passages 407 and 408.

A tubular guide member 415 having an opening portion 416 is arranged in the bypass 412. A valve body 417 having a shutter shape is arranged inside the guide member 415. The valve body 417 has passages 419 and 420. The valve body 417 is provided to a rod 423. The rod 423 is supported on a support member 421, and caused to move linearly to and fro by a solenoid actuator 424. This enables adjustment of the aperture of a fluid passage formed between the opening portion 416 and the passage 419. Thus, a damping force control in the bypass 412 is performed by adjusting the passage area in the bypass 412.

In FIG. 6(a), the bypass 412 is fully closed by the valve body 417, and therefore damping force characteristics are the maximum damping force characteristics. In FIG. 6(b), the bypass 412 is opened by the valve body 417, and therefore damping force characteristics are the minimum damping force characteristics. When a current is not fed, the bypass 412 is fully closed.

Conventional damping force control valves also include a valve including a poppet valve body, a solenoid, an elastic body, and a failure valve (for example, see Patent Document 2). The poppet valve body is arranged in the course of a fluid passage, to apply a resistance to a working fluid passing through the fluid passage. The solenoid applies a thrust force to the poppet valve body in such a direction that the area of the fluid passage is limited. The elastic body applies a thrust force to the poppet valve body in a backward direction such that the area of the fluid passage is enlarged. The failure valve is arranged in the course of the fluid passage and in series with the poppet valve body (for example, see Patent Document 2). In the valve disclosed in the Patent Document 2, an open position and a failure position of the failure valve are set. When the failure valve is in the open position, the area of the fluid passage is enlarged, while when the failure valve is in the failure position, the area of the fluid passage is reduced. When power supplied to the solenoid is equal to or less than a set value, the failure valve takes the failure position.

### [PRIOR ART DOCUMENTS]

### [PATENT DOCUMENTS]

[Patent Document 1] Japanese Patent No. 3060078
[Patent Document 2] Japanese Patent Application Laid-Open No. 2011-185392

### [SUMMARY OF THE INVENTION]

### [PROBLEMS TO BE SOLVED BY THE INVENTION]

The shock absorber 401 of the Patent Document 1 is configured such that the bypass 412 is fully closed when a current is not fed. Therefore, a maximum damping force occurs whenever current feeding is disabled. This results in a difficulty in sufficiently attenuating an impact, and comfort in riding may be deteriorated.

In a shock absorber of the Patent Document 2, the failure valve is provided in addition to the poppet valve body. This shock absorber is configured such that, when a current is not fed, the poppet valve body is moved in the backward direction while the failure valve is moved in a forward direction. This causes a problem that a structure for adjusting a damping force when a current feeding is disabled is complicated.

The present invention is accomplished in view of the problems described above. An object of the present invention is to provide a damping force control valve and a shock absorber, that achieve, with a small and simple structure, excellent comfort in riding with ensuring of excellent running performance even in a case where current feeding is disabled.

### [MEANS FOR SOLVING THE PROBLEMS]

To solve the problems described above, the present invention adopts the following configurations.
(1) A damping force control valve including:
   a valve body supported so as to be movable in a first direction or a second direction that is opposite to the first direction;
   a solenoid configured to apply a force directed in the first direction to the valve body;
   a biasing element configured to apply a force directed in the second direction to the valve body;
   a first working fluid chamber in which part of the valve body is positioned;
   a working fluid passage that is communicable with the first working fluid chamber via a first port or a second port; and
   the first port and the second port for communicating the first working fluid chamber with the working fluid passage,
   the damping force control valve being brought into a first state, a second state, or a third state as a result of a change in the position of the valve body caused by power supplied to the solenoid,
   the first state being a state where power is supplied to the solenoid so that the first port is opened and the second port is closed,
   the second state being a state where power supplied to the solenoid is lower than the power supplied to the solenoid in the first state so that the first port and the second port are closed,
   the third state being a state where power supplied to the solenoid is lower than the power supplied to the solenoid in the second state so that the first port is closed and the second port is opened.

In the configuration of (1), in a situation where power necessary for bringing the damping force control valve into the first state or the second state can be supplied to the solenoid, adjusting the aperture of the first port with the second port being closed enables a control of a damping force. At this time, the aperture of a fluid passage for a working fluid can be adjusted over a wide range including the fully closed state. In a situation where the power necessary for bringing the damping force control valve into the first state or the second state cannot be supplied to the solenoid (for example, a situation where current feeding to the solenoid is disabled), the first port is closed while the second port is opened. Since a working fluid passes through the second port, the damping force caused in the third state is weaker than the damping force caused in the second state (fully closed state). This can avoid occurrence of a situation where a maximum damping force is always caused when current feeding is disabled. Therefore, even when current feeding is disabled, excellent comfort in riding is achieved with ensuring of excellent running performance. Moreover, the configuration of (1) can be embodied by a single valve body. This enables downsizing of the damping force control valve and simplification of the configuration.
(2) The damping force control valve according to (1), wherein
   a first end portion of the valve body is positioned in the first working fluid chamber or the working fluid passage,
   the first port is formed in the first working fluid chamber and at a position that faces the first end portion of the valve body,
   the second port is formed in the valve body and at a position other than the first end portion, the second port being a port for allowing communication between the first working fluid chamber and the working fluid passage via a passage formed in the valve body,
   the first direction is a direction in which the first end portion of the valve body moves from the working fluid passage through the first port to the first working fluid chamber in an axial direction of the valve body,
   the second direction is a direction in which the first end portion of the valve body moves from the first working fluid chamber through the first port to the working fluid passage in the axial direction of the valve body,
   in the first state, the first port and the first end portion are separate from each other, and a gap formed between the first port and the first end portion serves as a fluid passage for a working fluid between the first working fluid chamber and the working fluid passage,
   in the third state, the second port is opened so that the first working fluid chamber and the working fluid passage are in communication with each other via the second port and the passage.

As for the conventional damping force control valve, referring to FIG. 6, the shock absorber 401 of the Patent Document 1 includes the valve body 417 having a shutter shape. Therefore, in order to ensure in the bypass 412 a wide range of a controllable flow rate (a difference between the minimum value and the maximum value of the area of a communication portion where the opening portion 416 and the passage 419 are in communication with each other), it is necessary to ensure a wide area as the area of a region where the valve body 417 and the guide member 415 radially face to each other. This inevitably increases the radial dimension of the valve body 417.

As a result, the area of a slide portion F where sliding between the guide member 415 and the valve body 417 occurs is enlarged, so that friction increases. Additionally, the slide portion F thus enlarged is positioned in a flow of oil, which may cause micro contamination to enter the slide portion so that friction further increases. To deal with the increase in friction, a spring 422 for biasing the valve body 417 in such a direction that the valve body 417 is closed needs to be strengthened. Strengthening the spring 422 leads to an increase in the size of the solenoid actuator 424 that drives the valve body 417.

In this respect, in the configuration of (2), the first end portion of the valve body and the first port face to each other, and a gap formed between the first end portion of the valve body and the first port serves as a fluid passage through which a working fluid flows. The aperture of the fluid passage changes depending on the position of the first end portion of the valve body that is configured to move linearly to and fro in the axial direction. Thereby, a damping force exerted when a current is fed is controlled. Unlike the shock absorber shown in FIG. 6, the amount of change in the fluid passage area relative to the amount of stroke (displacement in the axial direction) of the valve body is large. Therefore, a wide range can be ensured as a controllable flow-rate range without causing any increase in the diameter of the valve body.

In the first working fluid chamber, the gap between the first end portion of the valve body and the first port that face to each other serves as a fluid passage through which a working fluid flows, and therefore sliding between the valve body and an inner wall surface defining the first working fluid chamber does not occur at a time when the position of the first end portion of the valve body is adjusted. Accordingly, an increase in friction due to sliding can be avoided. Additionally, since no sliding occurs around the fluid passage through which a working fluid flows, an increase in friction due to involvement of micro contamination does not occur, either. Therefore, a configuration including the solenoid can be downsized.

The first port is formed at a position that faces the first end portion of the valve body, and can be closed by the first end portion of the valve body. The second port is a port for allowing communication between the first working fluid chamber and the working fluid passage via a passage formed in the valve body. When the second port is opened, a working fluid passes through the passage formed in the valve body. Thus, the amount of a working fluid that is allowed to flow through the second port in an open state is smaller than the amount of a working fluid that is allowed to flow through the first port in an open state. This enables a relatively large damping force to be obtained with avoidance of occurrence of a maximum damping force in the third state (for example, when a failure occurs). Thus, running performance at a time when current feeding is disabled can be further improved.

The second port is opened in the third state (when a failure occurs) and closed in the first state or the second state (when a current is fed). Since the damping force control valve is not often used in the third state, an increase in friction is not likely to occur even when sliding occurs around the second port.
(3) The damping force control valve according to (2), further including a second working fluid chamber in which a second end portion of the valve body is exposed, the second end portion being an end portion at the side opposite to the first end portion,
   the passage formed in the valve body includes a first passage and a second passage, the first passage extending through the interior of the valve body from the first end portion to the second end portion, the second passage providing communication between the first passage and the first working fluid chamber,
   the second port is formed in a side surface of the valve body, and the second passage and the first working fluid chamber are communicable with each other via the second port,
   in the third state, the second port is opened so that the working fluid passage and the first working fluid chamber are in communication with each other via the second port, the first passage, and the second passage.

As for the conventional damping force control valve, in the shock absorber 401 of the Patent Document 1, when current feeding is disabled, the rod 423 connecting the solenoid actuator 424 to the valve body 417 protrudes out of the support member 421 such that the valve body 417 blocks an oil passage (bypass 412). At this time, if hydraulic pressure around the valve body 417 is high, the protruding motion of the rod 423 is hindered. In order that the protruding motion of the rod 423 can overcome the hydraulic pressure, the spring 422 needs to be further strengthened, which leads to a further increase in the size of the solenoid actuator 424. In the field of vehicles including motorcycles, automobiles, and the like, there is an extremely high demand that a space for installation of a valve should be reduced to a maximum extent, because a space for installation of apparatuses is limited. From the viewpoint of improvement in the running performance, weight reduction of the valve is also an extremely strong demand. This is why an increase in the size of the valve should be avoided as much as possible.

In the configuration of (3), however, the first working fluid chamber and the second working fluid chamber are in communication with each other via the first passage. Thus, a pressure difference between the first end portion and the second end portion of the valve body is small. This enables suppression of occurrence of a pressure difference between the first working fluid chamber and the second working fluid chamber. Reinforcing the biasing element as illustrated in the shock absorber shown in FIG. 6 is not required. Therefore, an increase in the size of the solenoid can be avoided.
(4) The damping force control valve according to any one of (1) to (3), wherein
   the biasing element includes a first biasing element and a second biasing element having a smaller spring constant than that of the first biasing element,
   the first biasing element and the second biasing element are arranged in series in the axial direction of the valve body.

In the configuration of (4), the first biasing element and the second biasing element having a smaller spring constant than that of the first biasing element are arranged in series in the axial direction of the valve body. Accordingly, when the state of the damping force control valve is changed from the second state to the third state or changed from the third state to the second state, the second biasing element having a smaller spring constant extends or contracts greatly. As a result, the power supplied to the solenoid at a time of the state change from the third state to the second state is reduced.

Normally, the damping force control valve having the configuration of (4) is used in the first state or the second state unless a failure occurs. The power supplied to the solenoid in the first state or the second state is higher than the power supplied to the solenoid in the third state. The reduction in the power supplied to the solenoid at a time of the state change from the third state to the second state can reduce power consumption in the damping force control valve.
(5) The damping force control valve according to any one of (1) to (4), wherein
   an opening area of the second port in the third state is smaller than an opening area of the first port in the first state.

In the configuration of (5), a damping force ensured when the damping force control valve is in the third state can be larger than the damping force caused in the first state within a range weaker than the damping force obtained when the damping force control valve is in the second state. Accordingly, more excellent running performance can be ensured when current feeding is disabled.
(6) The damping force control valve according to any one of (1) to (5), wherein
   the biasing element is placed in the first working fluid chamber.

The configuration of (6) enables the valve body to be pulled out toward the first working fluid chamber side by means of the biasing element. Thereby, smooth movement of the valve body is achieved, thus further improving the positional stability of and responsiveness of the valve body.
(7) The damping force control valve according to any one of (1) to (6), wherein
   the valve body is supported on a valve body reception part in such a manner that the valve body is movable in the first direction or the second direction,
   in the first state and the second state, the second port is closed by the valve body reception part.

In the configuration of (7), opening and closing of the second port can be performed with a simple structure. Accordingly, downsizing of the damping force control valve and simplification of the structure of the damping force control valve are achieved at a higher level.
(8) A shock absorber including:
   the damping force control valve according to any one of (1) to (7).

In the configuration of (8), a small size and a wide range of the controllable flow rate can be ensured while maintaining the configuration that is able to ensure excellent running performance even when current feeding is disabled.

These and other objects, features, aspects and advantages of the present invention will become more apparent from the following detailed description, which, taken in conjunction with the accompanying drawings, discloses some embodiments of the present invention.

### [EFFECTS OF THE INVENTION]

The present invention achieves, with a small and simple structure, excellent comfort in riding with ensuring of excellent running performance even in a case where current feeding is disabled.

### [BRIEF DESCRIPTION OF THE DRAWINGS]

[FIG. 1] A vertical cross-sectional view schematically showing an example of a damping force control valve that is included in a shock absorber.
[FIG. 2A] A vertical cross-sectional view schematically showing, on an enlarged scale, part of the damping force control valve shown in FIG. 1 being in a first state.
[FIG. 2B] A vertical cross-sectional view schematically showing, on an enlarged scale, part of the damping force control valve shown in FIG. 1 being in a second state.
[FIG. 2C] A vertical cross-sectional view schematically showing, on an enlarged scale, part of the damping force control valve shown in FIG. 1 being in a third state.
[FIG. 3] A hydraulic circuit diagram showing an exemplary shock absorber including the damping force control valve shown in FIG. 1.
[FIG. 4] A hydraulic circuit diagram showing the exemplary shock absorber including the damping force control valve shown in FIG. 1.
[FIG. 5A] A vertical cross-sectional view schematically showing, on an enlarged scale, part of another damping force control valve being in a first state.
[FIG. 5B] A vertical cross-sectional view schematically showing, on an enlarged scale, part of another damping force control valve being in a second state.
[FIG. 5C] A vertical cross-sectional view schematically showing, on an enlarged scale, part of another damping force control valve being in a third state.
[FIG. 6] A diagram schematically showing a vertical cross-section of a conventional shock absorber.

### [EMBODIMENTS FOR CARRYING OUT THE INVENTION]

Hereinafter, an embodiment of the present invention will be described with reference to the drawings.

Firstly, a damping force control valve 10 included in a shock absorber 100 according to an embodiment will be described.

FIG. 1 is a vertical cross-sectional view schematically showing the damping force control valve 10 included in the shock absorber 100 according to the embodiment. A first direction U is a direction of a force that is applied to a valve body 20 when power is supplied to a solenoid. A second direction D is a direction of a force that is applied to the valve body 20 by biasing elements 34, 35, and 36 which will be described later. The first direction U and the second direction D extend in parallel with an axial direction S of the valve body 20. The first direction U and the second direction D are opposite directions.

The damping force control valve 10 includes an outer cylinder 11 (housing) in the shape of a hollow tube. The outer cylinder 11 has an opening 11 a at the side toward the second direction D, and an opening 11b at the side toward the first direction U. An inner cylinder 12 is fitted in the opening 11b of the outer cylinder 11. An end of the outer cylinder 11 at the side toward the first direction U is bent inward into abutment against the inner cylinder 12 with respect to the axial direction S. Thereby, the outer cylinder 11 and the inner cylinder 12 are fixed to each other. The outer cylinder 11 has a flange portion 11c that is provided in a substantially central portion of the outer cylinder 11 with respect to the axial direction S. The flange portion 11c annularly protrudes toward the axial core. The flange portion 11c has, in its inner edge portion, a tubular portion 11d that extends toward the opening 11b. A valve body reception part 13 having a tubular shape is received in the tubular portion 11d. The valve body reception part 13 has a flange portion 13a at the side toward the second direction D. The flange portions 11c and 13a abut against each other. Thereby, movement of the valve body reception part 13 toward the first direction U is restricted in the outer cylinder 11. The valve body reception part 13 has a guide hole 13b. The valve body 20 is slidably received in the guide hole 13b. Thus, the valve body 20 is supported on the valve body reception part 13 such that the valve body 20 is movable in the first direction U or the second direction D.

The valve body 20 has a first end portion 20a at the side toward the second direction D, and a second end portion 20b at the side toward the first direction U. A part (substantially the half) of the first end portion 20a of the valve body 20 is given a slant. A passage 21 is formed within the valve body 20. The passage 21 includes a first passage 21a and a second passage 21b.

The first passage 21 a extends through the valve body 20 from the first end portion 20a to the second end portion 20b. The first passage 21a is a column-shaped space. The diameter of the first passage 21a is substantially constant, but a space of the first passage 21 a at the first end portion 20a side has a tapered shape. The diameter of the first passage 21 a at the first end portion 20a side increases toward the first end portion 20a. As a result, part of a working fluid flowing in the second direction D, which has been discharged from a first working fluid chamber 30 into a working fluid passage 31, spreads with swirling in the tapered space. Therefore, the part of the working fluid is likely to flow toward the first direction U. This enables more efficient suppression of generation of a pressure difference between the first working fluid chamber 30 and a second working fluid chamber 40. The first working fluid chamber 30 and the second working fluid chamber 40 are described below. The first passage 21a extends in the axial direction S of the valve body 20.

The second passage 21 b provides communication between the first passage 21 a and the first working fluid chamber 30. The second passage 21b is a column-shaped space. The diameter of the second passage 21b is substantially constant. The diameter of the second passage 21 b is smaller than that of the first passage 21 a. The second passage 21b extends in a radial direction of the valve body 20. The second passage 21b is substantially perpendicular to the first passage 21a. In this embodiment, an opening of the second passage 21b that opens in a outer circumferential surface of the valve body 20 serves as a second port 30b. An opening area of the second port 30b is smaller than an opening area of a following first port 30a. The opening area of the second port 30b means the opening area obtained when the second port 30b is opened to the maximum. The opening area of the first port 30a means the opening area obtained when the first port 30a is opened to the maximum. Each of the first port 30a and the second port 30b is a port for communicating the first working fluid chamber 30 with the working fluid passage 31. The damping force control valve 10 includes the first port 30a and the second port 30b.

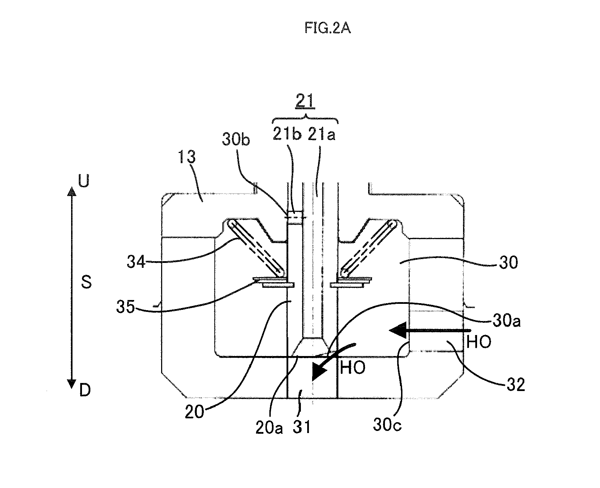

Part of the valve body 20 is positioned in the first working fluid chamber 30. The first end portion 20a of the valve body 20 at the side toward the second direction D is positioned in the first working fluid chamber 30, at least in a first state (see FIG. 2A). The first end portion 20a faces the first port 30a of the first working fluid chamber 30. The first end portion 20a is not in abutment against a wall surface (following bottom surface 26a) defining the first working fluid chamber 30. The valve body 20 is made of a non-magnetic material.

A support member 14 in the shape of a hollow tube is arranged at a position toward the first direction U from the tubular portion 11d. The support member 14 is, coaxially with the tubular portion 11d, opposed to the tubular portion 11d. The support member 14 is made of a magnetic material (such as iron). The support member 14 has an opening 14a formed at the side toward the second direction D, an opening 14b formed at the side toward the first direction U, and a guide portion 14c formed in a substantially central portion with respect to the axial direction S. The guide portion 14c annularly protrudes toward the axial core. A bearing 20c having an annular shape is arranged at the inner circumferential side of the guide portion 14c. The valve body 20 is received in the bearing 20c. The bearing 20c slidably supports the valve body 20. A spring bearing member 15 is fixed to an inner circumferential surface of the support member 14. The spring bearing member 15 is fixed at the side close to the opening 14b relative to the guide portion 14c. An annular seal 16 (for example, an O-ring) for hermetically closing a space between the support member 14 and the spring bearing member 15 is arranged on an outer circumferential surface of the spring bearing member 15. A cap 17 is arranged at an end of the support member 14 at the side toward the first direction U. The cap 17 closes the opening 14b. In the support member 14, a second working fluid chamber 40 is formed between the guide portion 14c and the spring bearing member 15.

The second end portion 20b of the valve body 20 is exposed to the inside of the second working fluid chamber 40. In the second working fluid chamber 40, a biasing element 36 is supported by the second end portion 20b of the valve body 20 and the spring bearing member 15. The biasing element 36 biases the valve body 20 toward the second direction D. In this embodiment, the biasing element 36 is a coiled spring, but it is not the only example of the biasing element 36. A tube member 19 having a tubular shape is provided so as to connect the tubular portion 11d and the support member 14 to each other. The tube member 19 is made of a non-magnetic material. A bobbin 22 is arranged within the outer cylinder 11. The bobbin 22 covers an outer circumferential surface of the support member 14 and an outer circumferential surface of the tube member 19. A solenoid coil 23 is wound on the bobbin 22. A cap 24 in the shape of an annular plate is attached to an inner circumferential surface of the outer cylinder 11. The cap 24 is attached between the bobbin 22 and the inner cylinder 12. The cap 24 is made of a magnetic material.

A plunger 25 having a tubular shape is fixed to the outer circumferential surface of the valve body 20. The plunger 25 is fixed at a position between the valve body reception part 13 and the guide portion 14c. The valve body reception part 13 faces toward the first working fluid chamber 30. The plunger 25 is made of a magnetic material. The inner diameter of the tubular portion 11d is larger than the outer diameter of the plunger 25. A portion of the support member 14 located at the side close to the opening 14a relative to the guide portion 14c has an inner diameter larger than the outer diameter of the plunger 25. Therefore, the plunger 25 is movable in the axial direction S between the valve body reception part 13 and the guide portion 14c. In the damping force control valve 10, adjusting the magnetic flux density of a magnetic field generated by the solenoid coil 23 causes the plunger 25 to move in the axial direction S between the valve body reception part 13 and the guide portion 14c. As a result, the valve body 20 moves in the axial direction S. The solenoid coil 23 and the plunger 25 are members constituting a solenoid. A space 25a where the plunger 25 is installed is defined by the tubular portion 11d, the valve body reception part 13, the guide portion 14c, and the tube member 19. A working fluid HO is loaded in the space 25a. The space 25a is in communication with the first working fluid chamber 30 via a gap formed between the outer circumferential surface of the valve body 20 and an inner circumferential surface of the valve body reception part 13. The space 25a is in communication with the second working fluid chamber 40 via a gap formed between the outer circumferential surface of the valve body 20 and an inner circumferential surface of the guide portion 14c.

A valve head 26 having a substantially cylindrical shape with a bottom is arranged at the opening 11a side within the outer cylinder 11. The valve head 26 is arranged in contact with the flange portion 13a of the valve body reception part 13. The first port 30a is formed at the center of the bottom surface 26a of the valve head 26. The first port 30a is arranged at a position that faces the first end portion 20a of the valve body 20. In the valve head 26, the working fluid passage 31 extends from the first port 30a in the second direction D. The valve head 26 has a third port 30c that is formed in an inner circumferential wall 26c of the valve head 26. In the valve head 26, a working fluid passage 32 extends outward from the third port 30c in a radial direction.

The valve head 26 and the valve body reception part 13 define the first working fluid chamber 30. The first working fluid chamber 30 has the guide hole 13b. The valve body 20 is interposed between the first working fluid chamber 30 and the second working fluid chamber 40. The first end portion 20a of the valve body 20 is arranged at the side close to the first working fluid chamber 30. The first working fluid chamber 30 and the second working fluid chamber 40 are in communication with each other via the passage 21 (first passage 21a) of the valve body 20. A space inside the first working fluid chamber 30 is located around the outer circumferential surface of the valve body 20. The working fluid HO flows in the radial direction of the valve body 20 from the working fluid passage 32 into the first working fluid chamber 30.

In the damping force control valve 10, the guide hole 13b and the first port 30a are formed at positions opposed to each other across the first working fluid chamber 30. The distance between the guide hole 13b and the first port 30a is longer than the distance between the first port 30a and the third port 30c. The distance between the guide hole 13b and the third port 30c is longer than the distance between the first port 30a and the third port 30c. The third port 30c is closer to the first port 30a than to the guide hole 13b with respect to the axial direction S. The third port 30c is provided between the guide hole 13b and the first port 30a with respect to the axial direction S. A member that is slidable on the valve body 20 is not provided in the first working fluid chamber 30.

In the damping force control valve 10, the valve body 20 is slidable in the guide hole 13b. However, an increase in friction due to micro contamination can be suppressed because sliding of the valve body 20 in the guide hole 13b occurs at a position remote from the first port 30a and the third port 30c. Although the sliding of the valve body 20 in the guide hole 13b occurs at a position near the second port 30b, the second port 30b is opened when a failure occurs and therefore the damping force control valve 10 is not often used under a state where the second port 30b is opened. This is why an increase in friction is not likely to occur.

In the first working fluid chamber 30, a downstream side surface 13c of the valve body reception part 13 and the bottom surface 26a of the valve head 26 are opposed to each other in the axial direction S. In the first working fluid chamber 30, a circlip 33 serving as a fixture is fixed to the outer circumference of the valve body 20. The fixture is not limited to a circlip.

An interposed member 37 having an annular shape is arranged in the first working fluid chamber 30. The interposed member 37 receives the valve body 20 passing therethrough. The interposed member 37 is positioned between the downstream side surface 13c of the valve body reception part 13 and the circlip 33. The interposed member 37 is movable relative to the valve body 20 in the axial direction S of the valve body 20.

A biasing element 34 is arranged between the downstream side surface 13c of the valve body reception part 13 and the interposed member 37. Although this embodiment adopts a coiled spring as the biasing element 34, the biasing element 34 is not limited to this example. The diameter of the biasing element 34 increases toward the first direction U. A biasing element 35 is arranged between the interposed member 37 and the circlip 33. Although this embodiment adopts a flat spring as the biasing element 35, the biasing element 35 is not limited to this example.

The biasing elements 34, 35, and 36 are arranged in series in the axial direction S. The biasing elements 34, 35, and 36 apply, to the valve body 20, a force acting in the second direction D. The spring constant of the biasing element 35 is smaller than the spring constants of the biasing elements 34 and 36. The biasing elements 34 and 36 correspond to the first biasing element. The biasing element 35 corresponds to the second biasing element. The biasing elements 34 and 35 are located in the first working fluid chamber 30.

In the damping force control valve 10, when power is supplied to the solenoid, a force acting in the first direction U is applied to the valve body 20. As a result, the biasing elements 34, 35, and 36 are compressed. The valve body 20 moves in the first direction U against the force acting in the second direction D that is applied by the biasing elements 34, 35, and 36. When the supply of power to the solenoid is stopped, the valve body 20 moves in the second direction D due to the force acting in the second direction D that is applied by the biasing elements 34, 35, and 36.

Such movements of the valve body 20 bring the damping force control valve 10 into a first state, a second state, or a third state. Next, the first state, the second state, and the third state will be described with reference to FIGS. 2A to 2C.

FIG. 2A is a vertical cross-sectional view schematically showing, on an enlarged scale, part of the damping force control valve being in the first state.

Power supplied to the solenoid in the first state is higher than power supplied to the solenoid in the second state and the power supplied to the solenoid in the third state.

In the first state, the biasing elements 34 and 35 are compressed in the first direction U. The biasing element 36 is compressed in the first direction U, though not shown. Consequently, the valve body 20 is positioned at the side toward the first direction U. In this embodiment, the first direction U is a direction in which the first end portion 20a of the valve body 20 moves from the working fluid passage 31 through the first port 30a to the first working fluid chamber 30 in the axial direction S of the valve body 20. The first port 30a and the first end portion 20a are separate from each other in the first state. A gap between the first port 30a and the first end portion 20a serves as a fluid passage for the working fluid HO between the first working fluid chamber 30 and the working fluid passage 31. The second port 30b is closed by the valve body reception part 13.

Thus, the first port 30a is opened and the second port 30b is closed in the first state. The working fluid HO flows from the working fluid passage 32 into the first working fluid chamber 30 through the third port 30c. The working fluid HO is discharged from the first working fluid chamber 30 into the working fluid passage 31 via the first port 30a.

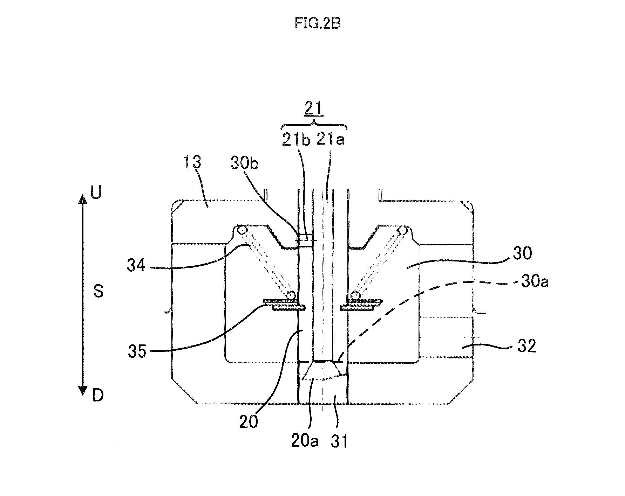

FIG. 2B is a vertical cross-sectional view schematically showing, on an enlarged scale, part of the damping force control valve being in the second state.

Power supplied to the solenoid in the second state is lower than power supplied to the solenoid in the first state and higher than power supplied to the solenoid in the third state.

In the second state, the biasing element 35 is compressed in a similar extent to the compression of the biasing element 35 occurring in the first state in the first direction U while the biasing element 34 is not compressed in a similar extent to the compression of the biasing element 34 occurring in the first state. The biasing element 36 is not compressed in a similar extent to the compression of the biasing element 36 occurring in the first state, though not shown. That is, the spring constant of the biasing element 35 is smaller than the spring constants of the biasing elements 34 and 36. In the second state, as compared with the first state, the valve body 20 is positioned closer to the side toward the second direction D. In this embodiment, the second direction D is a direction in which the first end portion 20a of the valve body 20 moves from the first working fluid chamber 30 through the first port 30a to the working fluid passage 31 in the axial direction S of the valve body 20. In the second state, the first end portion 20a of the valve body 20 is received in the working fluid passage 31 through the first port 30a. The first port 30a is closed by the valve body 20. The second port 30b is closed by the valve body reception part 13.

Thus, the first port 30a and the second port 30b are closed in the second state. Therefore, movement of the working fluid HO between the first working fluid chamber 30 and the working fluid passage 31 does not occur.

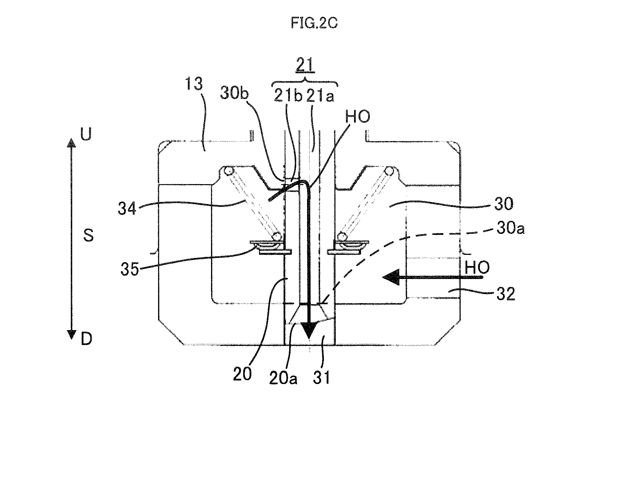

FIG. 2C is a vertical cross-sectional view schematically showing, on an enlarged scale, part of the damping force control valve being in the third state.

Power supplied to the solenoid in the third state is lower than power supplied to the solenoid in the first state and power supplied to the solenoid in the second state. For example, the power supplied to the solenoid in the third state is zero. That is, when current feeding to the solenoid is disabled (when a failure occurs), the damping force control valve 10 is brought into the third state.

In the third state, the biasing elements 34 and 35 are not compressed. The biasing element 36 is not compressed, though not shown. In the third state, as compared with the second state, the valve body 20 is positioned closer to the side toward the second direction D. The first port 30a is closed by the valve body 20. The second port 30b is opened.

Thus, the first port 30a is closed and the second port 30b is opened in the third state. Since the second port 30b is opened, the first working fluid chamber 30 and the working fluid passage 31 are in communication with each other. In other words, the first working fluid chamber 30 and the working fluid passage 31 are in communication with each other via the second port 30b and the passage 21. More specifically, the first working fluid chamber 30 and the working fluid passage 31 are in communication with each other via the second port 30b, the first passage 21a, and the second passage 21b.

The working fluid HO flows from the working fluid passage 32 into the first working fluid chamber 30 through the third port 30c. The working fluid HO is discharged from the first working fluid chamber 30 into the working fluid passage 31 via the second port 30b. In other words, the working fluid HO is discharged from the first working fluid chamber 30 into the working fluid passage 31 via the second port 30b and the passage 21. More specifically, the working fluid HO is discharged from the first working fluid chamber 30 into the working fluid passage 31 via the second port 30b, the first passage 21 a, and the second passage 21b.

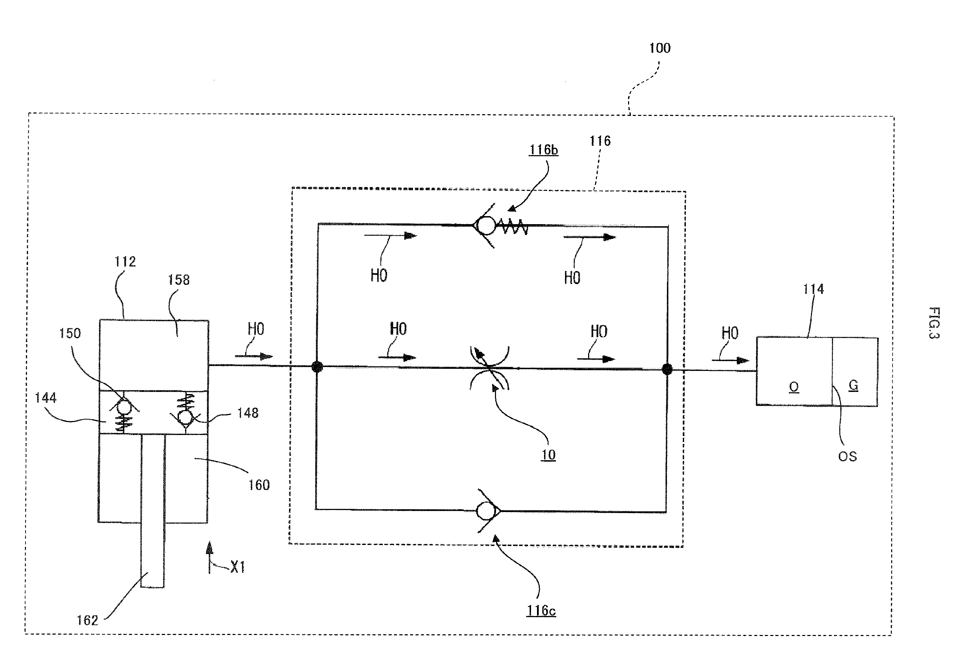

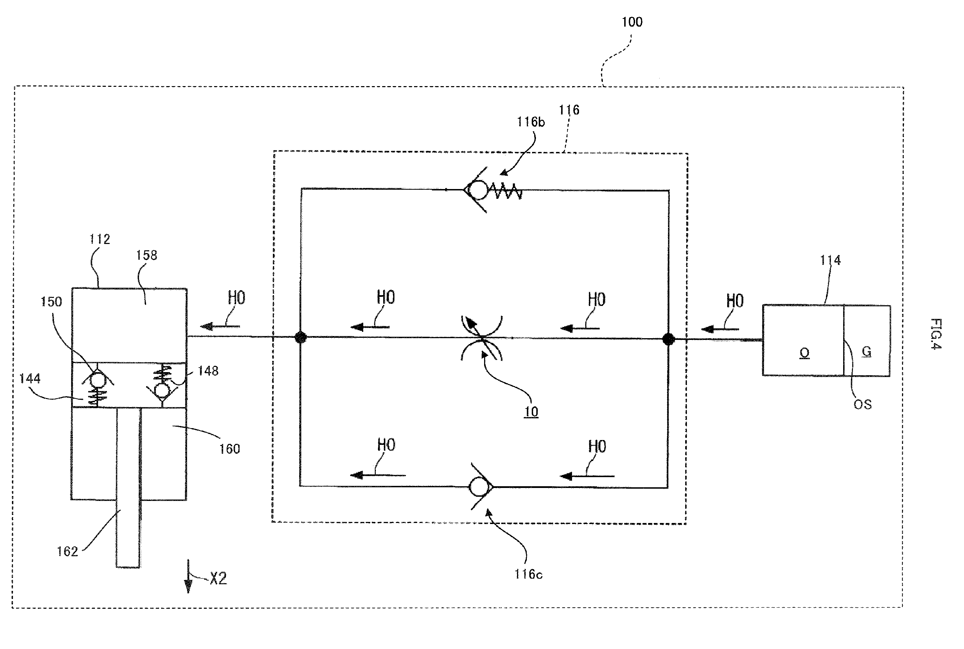

Next, the shock absorber 100 according to an embodiment will be described. FIGS. 3 and 4 are hydraulic circuit diagrams showing a shock absorber 100 including the damping force control valve 10 shown in FIG. 1.

The shock absorber 100 includes a hydraulic cylinder 112. A piston assembly 144 is placed in the hydraulic cylinder 112. The piston assembly 144 partitions the interior of the hydraulic cylinder 112 into two working fluid chambers 158 and 160. A piston rod 162 has its one end received in the hydraulic cylinder 112 from one end of the hydraulic cylinder 112. The one end of the piston rod 162 is fixed to the piston assembly 144. The other end of the piston rod 162 is connected to a vehicle body (not shown) of the vehicle. The other end of the hydraulic cylinder 112 is connected to a wheel (not shown) of the vehicle.

The piston assembly 144 serving as the damping force generation part includes damping valves 148 and 150 each having a plurality of shims. The damping valve 148 allows a working fluid HO to flow from the working fluid chamber 160 to the working fluid chamber 158, and at this time, a damping force is generated (extension damping). The damping valve 148 does not allow a working fluid HO to flow in the reverse direction. The damping valve 150 allows a working fluid HO to flow from the working fluid chamber 158 to the working fluid chamber 160, and at this time, a damping force is generated (compression damping). The damping valve 150 does not allow a working fluid HO to flow in the reverse direction.

A damping force adjustment unit 116 is placed between the working fluid chamber 158 and a reservoir tank 114. In the damping force adjustment unit 116, the damping force control valve 10, a damping valve 116b including a plurality of shims, and a check valve 116c are arranged in parallel. The damping valve 116b allows a working fluid HO to flow from the hydraulic cylinder 112 side to the reservoir tank 114 side, and does not allow a working fluid HO to flow in the reverse direction. The check valve 116c allows a working fluid HO to flow from the reservoir tank 114 side to the hydraulic cylinder 112 side, and does not allow a working fluid HO to flow in the reverse direction. A working fluid HO and a gas G are contained in the reservoir tank 114. The working fluid HO and the gas G are in contact with each other at an interface OS. The working fluid HO is, for example, a hydraulic oil. The gas G is, for example, a nitrogen gas or air.

In the states shown in FIGS. 2A and 2C, the damping force control valve 10 allows the working fluid HO to flow in the direction from the working fluid passage 32 toward the working fluid passage 31 through the first working fluid chamber 30. The damping force control valve 10 also allows the working fluid to flow in the reverse direction. The damping force control valve 10 is arranged in parallel with the damping valve 116b, as shown in FIGS. 3 and 4.

When the piston assembly 144 moves in a direction X1, a working fluid HO whose amount corresponds to the volume of the piston rod 162 having entered the hydraulic cylinder 112 is discharged from the hydraulic cylinder 112 and moved into the reservoir tank 114. The damping force control valve 10 and the damping valve 116b are arranged in parallel, and the working fluid HO discharged from the hydraulic cylinder 112 passes through the damping force control valve 10 and the damping valve 116b and flows into the reservoir tank 114, as shown in FIG. 3. In the damping force control valve 10, a flow of the working fluid HO is directed so as to discharge the working fluid from the first working fluid chamber 30 through the first port 30a. A resistance occurring when the working fluid HO flows through the damping force adjustment unit 116 (the damping valve 116b, the damping force control valve 10 and the check valve 116c) raises the pressure of the working fluid HO in the hydraulic cylinder 112, so that a force (the pressure of the working fluid HO in the cylinder × the cross-sectional area of the piston assembly 144) against the movement of the piston rod 162 in the direction X1 is generated. That is, a compression damping force (1) is generated. Here, adjusting the aperture of the damping force control valve 10 results in a change in the ratio between the flow rates of the damping valve 116b and the damping force control valve 10. This causes the resistance of the damping force adjustment unit 116 to be adjusted, so that the compression damping force acting on the piston rod 162 is adjusted. The working fluid HO also flows through the damping valve 150 of the piston assembly 144, in the direction from the working fluid chamber 158 toward the working fluid chamber 160. A resistance occurring at this time acts on the piston assembly 144, and applied as a compression damping force (2) to the piston rod 162.

On the other hand, when the piston assembly 144 moves in a direction X2, a working fluid HO whose amount corresponds to the volume of the piston rod 162 having exited the hydraulic cylinder 112 passes through the check valve 116c with no resistance, and returns to the hydraulic cylinder 112, as shown in FIG. 4. In case where the damping force control valve 10 is open, a working fluid HO can also pass through the damping force control valve 10.

In the above-described manner, the shock absorber 100 is able to adjust part of damping forces caused in compression by means of the damping force control valve 10. To be specific, the shock absorber 100 is able to adjust, in the damping force (that is, the compression damping forces (1) and (2)) caused in compression, the compression damping force (1) that is generated by a resistance occurring when a working fluid HO flows through the damping force adjustment unit 116.

The present invention is not limited to this example. For example, it may be acceptable that the shock absorber 100 is able to adjust the whole of the damping force caused in compression by means of the damping force adjustment unit 116. More specifically, in the example illustrated in FIGS. 3 and 4, a check valve that allows a working fluid HO to flow from the working fluid chamber 158 to the working fluid chamber 160 may be provided instead of the damping valve 150. The shock absorber 100 having such a configuration generates the compression damping force (1) but does not generate the compression damping force (2) when the piston assembly 144 moves in the direction X1. Therefore, the whole of the damping force caused in compression can be adjusted by adjusting the compression damping force (1).

In the shock absorber 100 described above, in a situation where the power necessary for bringing the damping force control valve 10 into the first state (FIG. 2A) or the second state (FIG. 2B) can be supplied to the solenoid, adjusting the aperture of the first port 30a with the second port 30b being closed enables a control of the damping force. At this time, the aperture of the first port 30a can be adjusted over a wide range including the fully opened state to the fully closed state. In a situation where the power necessary for bringing the damping force control valve 10 into the first state or the second state cannot be supplied to the solenoid (for example, a situation where current feeding to the solenoid is disabled), the damping force control valve 10 is in the third state (FIG. 2C). In the third state, the first port 30a is closed while the second port 30b is opened. Since the working fluid HO passes through the second port 30b, the damping force caused in the third state is weaker than the damping force caused in the second state (fully closed state). This can avoid occurrence of a situation where a maximum damping force is always caused when current feeding is disabled. Therefore, even when current feeding is disabled, excellent comfort in riding is achieved with ensuring of excellent running performance. Moreover, the configuration of the damping force control valve 10 can be embodied by a single valve body 20. This enables downsizing of the damping force control valve and simplification of the configuration.

The first end portion 20a of the valve body 20 faces the first port 30a, and a gap between the first end portion 20a of the valve body 20 and the first port 30a serves as a fluid passage through which the working fluid HO flows. As a result, the amount of change in the passage area is large relative to the amount of stroke (displacement in the axial direction S) of the valve body 20. Therefore, a wide range can be ensured as a controllable flow-rate range without causing any increase in the diameter of the valve body 20. In the first working fluid chamber 30, the gap between the first end portion 20a of the valve body 20 and the first port 30a serves as a fluid passage through which the working fluid HO flows, and therefore sliding between the valve body 20 and an inner wall surface defining the first working fluid chamber 30 does not occur at a time when the position of the first end portion 20a of the valve body 20 is adjusted. Accordingly, an increase in friction due to sliding can be avoided. Additionally, since no sliding occurs around the fluid passage through which the working fluid HO flows, an increase in friction due to involvement of micro contamination does not occur, either. Therefore, a configuration including the solenoid can be downsized. Furthermore, the amount of a working fluid HO that is allowed to flow through the second port 30b in an open state in the third state is smaller than the amount of a working fluid HO that is allowed to flow through the first port 30a in an open state in the first state. This enables a relatively large damping force to be obtained with avoidance of occurrence of a maximum damping force in the third state (for example, when a failure occurs). Thus, running performance at a time when current feeding is disabled can be further improved.

The first working fluid chamber 30 and the second working fluid chamber 40 are in communication with each other via the first passage 21 a. Thus, a pressure difference between the first end portion 20a and the second end portion 20b of the valve body 20 is small. This enables suppression of occurrence of a pressure difference between the first working fluid chamber 30 and the second working fluid chamber 40. Since there is no need to reinforce the biasing element, an increase in the size of the solenoid can be avoided.

When the state of the damping force control valve 10 is changed from the second state to the third state or changed from the third state to the second state, the biasing element 35 having a small spring constant extends or contracts greatly. As a result, the power supplied to the solenoid at a time when the state of the damping force control valve 10 is changed from the third state to the second state is reduced. The damping force control valve 10 is used in the first state or the second state unless a failure occurs. Therefore, the reduction in the power supplied to the solenoid at a time when the state of the damping force control valve 10 is changed from the third state to the second state can reduce power consumption in the damping force control valve 10.

The opening area of the second port 30b in the third state is smaller than the opening area of the first port 30a in the first state. Thus, the damping force ensured when the damping force control valve 10 is in the third state can be larger than the damping force caused in the first state within a range weaker than the damping force obtained when the damping force control valve 10 is in the second state. Accordingly, more excellent running performance can be ensured when current feeding is disabled.

The biasing elements 34 and 35 are placed in the first working fluid chamber 30. This enables the valve body 20 to be pulled out toward the first working fluid chamber 30 side by means of the biasing elements 34 and 35. As a result, smooth movement of the valve body 20 is achieved, thus further improving the positional stability of and responsiveness of the valve body 20.

The valve body 20 is supported on the valve body reception part 13 in such a manner that the valve body 20 is movable in the first direction U or the second direction D, and the second port 30b is closed by the valve body reception part 13 when the valve body 20 is in the first state or the second state. Since opening and closing of the second port 30b can be performed with a simple structure, downsizing of the damping force control valve 10 and simplification of the structure of the damping force control valve 10 are achieved at a higher level.

Although the above-described embodiment illustrates a case where the damping force control valve 10 is connected to the hydraulic cylinder 112, a manner in which the damping force adjustment unit is arranged is not limited to the example illustrated above. The shock absorber 100 shown in FIGS. 3 and 4 is configured such that the damping force control valve 10 allows a working fluid HO to flow in both directions. However, the present invention is not limited to this example. In the present invention, it is preferable that a working fluid HO is allowed to flow at least in such a direction that the working fluid HO is discharged from the first working fluid chamber 30 through the first port 30a. It may be also acceptable in the shock absorber 100 that a working fluid HO is allowed to flow in such a direction that the working fluid HO is discharged from the first working fluid chamber 30 through the first port 30a at a time of extension, or that a working fluid HO is allowed to flow in such a direction that the working fluid HO is discharged from the first working fluid chamber 30 through the first port 30a at a time of compression.

In the shock absorber 100, the damping force adjustment unit 116 is placed between the hydraulic cylinder 112 and the reservoir tank 114, and the check valve 116c serving as the damping force generation part for generating the compression damping force is placed in the damping force adjustment unit 116, and the damping force control valve 10 is arranged in parallel with the damping valve 116b. At a time of compression, a working fluid HO whose amount corresponds to the volume of the piston rod 162 entering the hydraulic cylinder 112 flows through the damping force adjustment unit 116. Part of the working fluid HO flows through the damping valve 116b, and the rest of the working fluid HO flows through the damping force control valve 10. At this time, the damping valve 116b and the damping force control valve 10 are in a parallel relationship. The present invention is not limited to this example. For example, instead of the check valve 116c, a damping valve serving as the damping force generation part may be placed in the shock absorber 100. In such a case, the damping force control valve 10 is arranged in parallel with the damping valve that generates the extension damping force. At a time of extension, a working fluid HO whose amount corresponds to the volume of the piston rod 162 exiting the hydraulic cylinder 112 flows through the damping force adjustment unit 116. Part of the working fluid HO flows through the damping valve, and the rest of the working fluid HO flows through the damping force control valve 10. At this time, the damping valve and the damping force control valve 10 are in a parallel relationship.

In the present invention, the damping force control valve 10 may be, at a location outside the hydraulic cylinder 112, arranged in parallel with the damping force generation part (damping valve 116b) for generating the compression damping force, or in parallel with the damping force generation part for generating the extension damping force. The damping force control valve 10 may be arranged in parallel with both of them.

Alternatively, the damping force control valve 10 may be arranged in parallel with the damping valve 150 provided within the hydraulic cylinder 112. At a time of compression, a working fluid HO whose amount corresponds to a volume decrease in the working fluid chamber 158 flows through the damping valve 150. Part of the working fluid HO flows through the damping valve 150, and the rest of the working fluid HO flows through the damping force control valve 10. At this time, the damping valve 150 and the damping force control valve 10 are in a parallel relationship. The damping force control valve 10 may be arranged in parallel with the damping valve 148 provided within the hydraulic cylinder 112. At a time of extension, a working fluid HO whose amount corresponds to a volume decrease in the working fluid chamber 160 flows through the damping valve 148. Part of the working fluid HO flows through the damping valve 148, and the rest of the working fluid HO flows through the damping force control valve 10. At this time, the damping valve 148 and the damping force control valve 10 are in a parallel relationship.

In the present invention, the damping force control valve 10 may be, at a location inside the hydraulic cylinder 112, arranged in parallel with the damping force generation part (damping valve 150) for generating the compression damping force, or in parallel with the damping force generation part (damping valve 148) for generating the extension damping force. The damping force control valve 10 may be arranged in parallel with both of them. The present invention puts no particular limitation on the position where the damping force control valve 10 is arranged and how the damping force control valve 10 is arranged. It is preferable that the damping force control valve 10 is arranged in parallel with the damping force generation part.

In the damping force control valve 10, the biasing elements 34, 35, and 36 are arranged so as to apply a force acting in the second direction D to the valve body 20. Instead, it may be possible that not only a biasing element for applying a force acting in the second direction D to the valve body 20 but also a biasing element for applying a force acting in the first direction U to the valve body 20 is provided in the damping force control valve 10.

Although the above-described embodiment illustrates a valve body having a cylindrical shape, the shape of a valve body is not limited to the example illustrated above. In a possible example, a valve body may be in the shape of a hollow rectangular tube. The shape of the working fluid passage is not limited to the example illustrated above, either. A cross-section of the working fluid passage may be polygonal or elliptical. In a case described in this embodiment, a proportional solenoid is adopted as the solenoid. However, the present invention is not limited to this, and for example, an ON-OFF solenoid is adoptable as the solenoid.

The damping force control valve is not limited to the above-described embodiment.

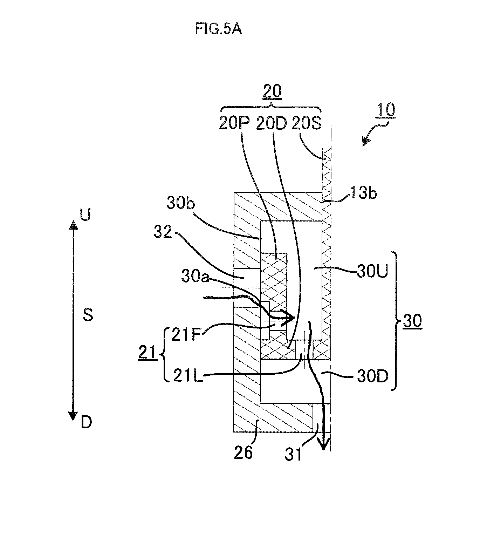

Next, a damping force control valve according to another embodiment will be described with reference to FIGS. 5A to 5C.

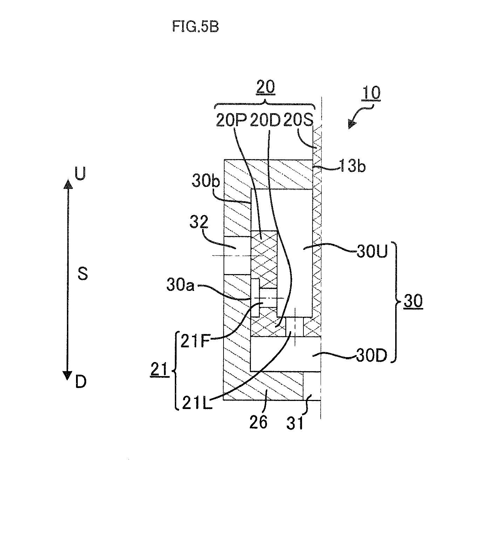

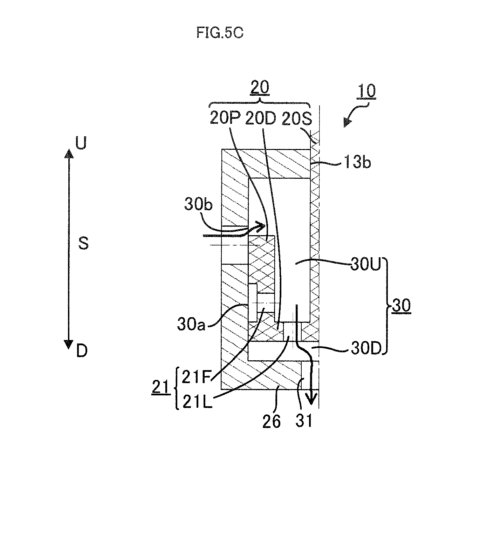

FIG. 5A is a vertical cross-sectional view schematically showing, on an enlarged scale, part of another damping force control valve being in a first state. FIG. 5B is a vertical cross-sectional view schematically showing, on an enlarged scale, part of another damping force control valve being in a second state. FIG. 5C is a vertical cross-sectional view schematically showing, on an enlarged scale, part of another damping force control valve being in a third state. In FIGS. 5A to 5C, configurations corresponding to the configurations shown in FIGS. 1 to 4 are given the same reference signs as given on FIGS. 1 to 4. In FIGS. 5A to 5C, only the left half of the damping force control valve is shown. Parts of the damping force control valve shown in FIGS. 5A to 5C are laterally symmetrical.

The damping force control valve 10 shown in FIGS. 5A to 5C includes a valve head 26 in the shape of a hollow column. A space inside the valve head 26 serves as a first working fluid chamber 30. A guide hole 13b is formed in an upper wall portion of the valve head 26 located at the side toward the first direction U. The guide hole 13b extends through the upper wall portion in the axial direction S. A working fluid passage 31 is formed in a lower wall portion of the valve head 26 located at the side toward the second direction D. The working fluid passage 31 extends through the lower wall portion in the axial direction S. A working fluid passage 32 is formed in a side wall of the valve head 26. The working fluid passage 32 extends through the side wall in a radial direction of the valve head 26.

The valve body 20 includes a shaft portion 20S, a plate-like portion 20D, and a tubular portion 20P. The shaft portion 20S extends in the axial direction S of the valve body 20. The plate-like portion 20D is in the shape of a flat plate. The tubular portion 20P has a tubular shape. The valve body 20 is slidably received in the guide hole 13b. Thus, the valve body 20 is supported such that it is movable in the first direction U or the second direction D. The plate-like portion 20D is provided in an end portion of the shaft portion 20S at the side toward the second direction D. An outer circumferential edge of the plate-like portion 20D is in contact with an inner side wall surface of the valve head 26. The tubular portion 20P is provided on a surface of the plate-like portion 20D at the side toward the first direction U. An outer circumferential surface of the tubular portion 20P is in contact with the inner side wall surface of the valve head 26. Along with movement of the valve body 20 in the first direction U or the second direction D, an outer side surface of the valve body 20 (the outer circumferential edge of the plate-like portion 20D and the outer circumferential surface of the tubular portion 20P) moves along the inner side wall surface of the valve head 26. An inner circumferential surface of the tubular portion 20P is not in contact with a side surface of the shaft portion 20S.

The plate-like portion 20D of the valve body 20 divides the first working fluid chamber 30 into a space 30U and a space 30D. The space 30U is located at the side toward the first direction U. The space 30D is located at the side toward the second direction D.

The tubular portion 20P of the valve body 20 has a passage 21F formed through the tubular portion 20P in the radial direction of the valve body 20. A portion of the outer circumferential surface of the tubular portion 20P where the opening of the passage 21F is formed serves as a first port 30a. The first working fluid chamber 30 and the working fluid passage 32 are communicable with each other via the first port 30a (FIG. 5A). The first port 30a can be closed by the inner side wall surface of the valve head 26 (FIGS. 5B and 5C).

A gap formed between an end surface of the tubular portion 20P of the valve body 20 at the side toward the first direction U and an end surface of the upper wall portion of the valve head 26 serves as a second port 30b. The first working fluid chamber 30 and the working fluid passage 32 are communicable with each other via the second port 30b (FIG. 5C). The second port 30b can be closed by the inner side wall surface of the valve head 26 (FIGS. 5A and 5B).

The plate-like portion 20D has a passage 21L formed through the plate-like portion 20D in the axial direction S of the valve body 20. The space 30U and the space 30D of the first working fluid chamber 30 are in communication with each other via the passage 21L.

The damping force control valve 10 includes a solenoid and a biasing element, though not shown. The solenoid and the biasing element are provided at the side toward the first direction U relative to the valve head 26. The solenoid applies a force acting in the first direction U to the valve body 20. The biasing element applies a force acting in the second direction D to the valve body 20. The damping force control valve 10 is brought into the first state, the second state, or the third state as a result of a change in the position of the valve body 20 caused by power supplied to the solenoid. Similarly to the above-described embodiment, the magnitude of the power supplied to the solenoid satisfies the relationship of the first state > the second state > the third state.

In the first state, as shown in FIG. 5A, the first port 30a is opened and the second port 30b is closed. Therefore, the first working fluid chamber 30 and the working fluid passage 32 are in communication with each other via the first port 30a. The working fluid HO flows through the working fluid passage 32, the first port 30a, the passage 21F, the space 30U, the passage 21L, and the space 30D in this order, and then is discharged into the working fluid passage 31.

In the second state, as shown in FIG. 5B, the first port 30a and the second port 30b are closed. Therefore, movement of the working fluid HO between the first working fluid chamber 30 and the working fluid passage 32 does not occur.

In the third state, as shown in FIG. 5C, the first port 30a is closed and the second port 30b is opened. Therefore, the first working fluid chamber 30 and the working fluid passage 32 are in communication with each other via the second port 30b. The working fluid HO flows through the working fluid passage 32, the second port 30b, the space 30U, the passage 21L, and the space 30D in this order, and then is discharged into the working fluid passage 31.

The embodiment shown in FIGS. 5A to 5C can adopt the following configurations.

The biasing element may include a first biasing element and a second biasing element having a smaller spring constant than that of the first biasing element. The first biasing element and the second biasing element may be arranged in series in the axial direction S.

An opening area of the second port 30b in the third state may be smaller than an opening area of the first port 30a in the first state. Furthermore, the biasing element may be placed in the first working fluid chamber 30.

In the embodiment shown in FIGS. 5A to 5C as well, in a situation where the power necessary for bringing the damping force control valve 10 into the first state (FIG. 5A) or the second state (FIG. 5B) can be supplied to the solenoid, adjusting the aperture of the first port 30a with the second port 30b being closed enables a control of the damping force. At this time, the aperture of the fluid passage for the working fluid HO can be adjusted over a wide range including the fully closed state. In a situation where the power necessary for bringing the damping force control valve 10 into the first state or the second state cannot be supplied to the solenoid (for example, a situation where current feeding to the solenoid is disabled), the first port 30a is closed while the second port 30b is opened. Since the working fluid HO passes through the second port 30b, the damping force caused in the third state is weaker than the damping force caused in the second state (fully closed state). This can avoid occurrence of a situation where a maximum damping force is always caused when current feeding is disabled. Therefore, even when current feeding is disabled, excellent comfort in riding is achieved with ensuring of excellent running performance. Moreover, the configuration shown in FIGS. 5A to 5C can be embodied by a single valve body 20. This enables downsizing of the damping force control valve 10 and simplification of the configuration.

While some preferred embodiments of the present invention have been thus far described, it is obvious that various changes and modifications can be made within the scope and the spirit of the present invention. The scope of the present invention is limited only by the accompanied claims.

### [DESCRIPTION OF THE REFERENCE SIGNS]

- 10: damping force control valve
- 20: valve body
- 21: passage
- 21a: first passage
- 21b: second passage
- 23: solenoid coil
- 26: valve head
- 30: first working fluid chamber
- 30a: first port
- 30b: second port
- 31: working fluid passage
- 40: second working fluid chamber
- 100: shock absorber

## Claims

1. A damping force control valve (10) comprising:
a valve body (20) supported so as to be movable in a first direction or a second direction that is opposite to the first direction;
a solenoid (23, 25) configured to apply a force directed in the first direction to the valve body (20);
a biasing element (34, 35, 36) configured to apply a force directed in the second direction to the valve body (20);
a first working fluid chamber (30) in which part of the valve body (20) is positioned;
a working fluid passage (31) that is communicable with the first working fluid chamber (30) via a first port (30a) or a second port (30b); and
the first port (30a) and the second port (30b) for communicating the first working fluid chamber (30) with the working fluid passage (31),
the damping force control valve (10) being configured to be brought into a first state, a second state, or a third state as a result of a change in the position of the valve body (20) caused by power supplied to the solenoid (23, 25),
the first state being a state where power is supplied to the solenoid (23, 25) so that the first port (30a) is opened and the second port (30b) is closed,
the second state being a state where power supplied to the solenoid (23, 25) is lower than the power supplied to the solenoid (23, 25) in the first state so that the first port (30a) and the second port (30b) are closed,
the third state being a state where power supplied to the solenoid (23, 25) is lower than the power supplied to the solenoid (23, 25) in the second state so that the first port (30a) is closed and the second port (30b) is opened.

2. The damping force control valve (10) according to claim 1, wherein
a first end portion (20a) of the valve body (20) is positioned in the first working fluid chamber (30) or the working fluid passage (31),
the first port (30a) is formed in the first working fluid chamber (30) and at a position that faces the first end portion (20a) of the valve body (20),
the second port (30b) is formed in the valve body (20) and at a position other than the first end portion (20a), the second port (30b) being a port for allowing communication between the first working fluid chamber (30) and the working fluid passage (31) via a passage (21) formed in the valve body (20),
the first direction is a direction in which the first end portion (20a) of the valve body (20) moves from the working fluid passage (31) through the first port (30a) to the first working fluid chamber (30) in an axial direction of the valve body (20),
the second direction is a direction in which the first end portion (20a) of the valve body (20) moves from the first working fluid chamber (30) through the first port (30a) to the working fluid passage (31) in the axial direction of the valve body (20),
in the first state, the first port (30a) and the first end portion (20a) are separate from each other, and a gap formed between the first port (30a) and the first end portion (20a) serves as a fluid passage for a working fluid between the first working fluid chamber (30) and the working fluid passage (31),
in the third state, the second port (30b) is opened so that the first working fluid chamber (30) and the working fluid passage (31) are in communication with each other via the second port (30b) and the passage (21).

3. The damping force control valve (10) according to claim 2, further comprising a second working fluid chamber (40) in which a second end portion (20b) of the valve body (20) is exposed, the second end portion (20b) being an end portion at the side opposite to the first end portion (20a),
the passage (21) formed in the valve body (20) includes a first passage (21a) and a second passage (21 b), the first passage (21a) extending through the interior of the valve body (20) from the first end portion (20a) to the second end portion (20b), the second passage (21b) providing communication between the first passage (21a) and the first working fluid chamber (30),
the second port (30b) is formed in a side surface of the valve body (20), and the second passage (21b) and the first working fluid chamber (30) are communicable with each other via the second port (30b),
in the third state, the second port (30b) is opened so that the working fluid passage (31) and the first working fluid chamber (30) are in communication with each other via the second port (30b), the first passage (21a), and the second passage (21b).

4. The damping force control valve (10) according to any one of claims 1 to 3, wherein
the biasing element (34, 35, 36) includes a first biasing element (34, 36) and a second biasing element (35) having a smaller spring constant than that of the first biasing element (34, 36),
the first biasing element (34, 36) and the second biasing element (35) are arranged in series in the axial direction of the valve body (20).

5. The damping force control valve (10) according to any one of claims 1 to 4, wherein
an opening area of the second port (30b) in the third state is smaller than an opening area of the first port (30a) in the first state.

6. The damping force control valve (10) according to any one of claims 1 to 5, wherein
the biasing element (34, 35, 36) is placed in the first working fluid chamber (30).

7. The damping force control valve (10) according to any one of claims 1 to 6, wherein
the valve body (20) is supported on a valve body reception part (13) in such a manner that the valve body (20) is movable in the first direction or the second direction,
in the first state and the second state, the second port (30b) is closed by the valve body reception part (13).

8. A shock absorber (100) comprising:
the damping force control valve (10) according to any one of claims 1 to 7.
